# EUROPÄISCHE PATENTSCHRIFT

(11) **EP 0 456 057 B1**
(45) Veröffentlichungstag und Bekanntmachung des Hinweises auf die Patenterteilung: **07.09.1994**
(21) Anmeldenummer: 91106840.1
(22) Anmeldetag: 26.04.1991
(51) Int. Cl.: B01D 17/025, E03F 5/16

(54) **Abscheider für Leichtflüssigkeiten**
Separator for light liquids
Séparateur de liquides légers

(30) Priorität: 10.05.1990 DE 9005311 U
(43) Veröffentlichungstag der Anmeldung: 13.11.1991
(73) Patentinhaber: NATUURBETON-MILIEU B.V., NL-6031 NG Nederweert (NL)
(72) Erfinder: Hawinkels, Gerardus W.P.M., NL-6071 NX Swalmen (NL)
(74) Vertreter: Finkener und Ernesti Patentanwälte

(56) Entgegenhaltungen:
- EP-A- 0 225 506
- EP-A- 0 319 713
- DE-U- 8 530 572
- DE-U- 8 900 667

## Beschreibung

Die Erfindung bezieht sich auf einen Abscheider für Leichtflüssigkeiten, insbesondere zum Trennen von Gemischen aus Wasser und spezifisch leichteren Flüssigkeiten wie Öl, Benzin oder dergleichen, mit einem Behälter, der an seinem oberen Ende einen Einlauf und einen mit einem Tauchrohr verbundenen Auslauf aufweist, ferner mit einem Einsatz in Gitter- oder Netzstruktur für den Durchtritt der gesamten Flüssigkeitsströmung zwischen Ein- und Auslauf.

Leichtflüssigkeitsabscheider dieser Art sind in verschiedenen Ausführungen bekannt. Die EP-A-0 225 506 beschreibt einen Leichtflüssigkeitsabscheider, in dessen Behälter zwecks Strömungsgleichrichtung und Koaleszieren von suspendierten Öltropfen aus Netz- oder Gitterstrukturen bestehende Einsätze vorgesehen sind. Bei einer ersten Ausführung ist zur Einbringung der genannten Strukturen eine in Form einer senkrechten, den Behälterquerschnitt in Strömungsrichtung ausfüllenden, horizontal strömungsdurchlässige Wand vorgesehen, während bei einer anderen Ausführung ein mit einem Ablauftauchrohr verbundener, senkrecht angeordneter, horizontal strömungsdurchlässiger Hohlzylinder eingesetzt ist.

Bei einem anderen, aus der DE-U-85 30 572 bekannten Leichtflüssigkeitsabscheider ist bei einer ersten Ausführung in der Nähe des Behälterbodens hinter dem Austritt der Flüssigkeit aus dem Einlaufrohr ein Paket aus abscheidewirksamem Material mit relativ geringer Dicke angeordnet. Bei einer zweiten Ausführung mündet das Einlaufrohr in eine Hülse in Doppelkonusform, wobei die konische Innenwand der Hülse flüssigkeitsdurchlässig ist und in dem Ringraum zwischen den beiden Wandungen der Hülse, dessen Querschnitt nach oben zunimmt, das abscheidewirksame Material eingebettet ist.

Bei den vorgenannten Leichtflüssigkeitsabscheidern wird der zur Verfügung stehende Bauraum und das abscheidewirksame Material nicht optimal ausgenutzt. Um einen ausreichenden Abscheidegrad zu erzielen, sind somit relativ große wirksame Querschnitte der Einsätze aus abscheidewirksamem Material erforderlich.

Die Aufgabe der Erfindung besteht darin, einen Leichtflüssigkeitsabscheider gemäß dem genannten Stand der Technik im Sinne eines möglichst hohen spezifischen Abscheidegrades zu verbessern. Weiter wird bei einer insgesamt kompakten Bauweise eine Lösung angestrebt, die ein leichtes Auswechseln des abscheidewirksamen Materials ermöglicht.

Diese Aufgabe wird mit den in den Ansprüchen 1 oder 4 genannten Merkmalen gelöst. So ist bei einer ersten Ausführungsform der Einsatz als aufrechtstehender, doppelwandiger Hohlzylinder ausgebildet, bei dem zwischen Innen- und Außenwand die Gitter- oder Netzstruktur eingebettet ist, wobei die äußere Zylinderwand mit ihrem oberen Ende über die Höhe des Auslaufs (Flüssigkeitsspiegel) hinausragt, als Tauchwand flüssigkeitsundurchlässig ist und am unteren Ende Einlauföffnungen aufweist, während die innere Zylinderwand unterhalb der Höhe des Auslaufes (Flüssigkeitsspiegels im Behälter) endet und als Überlauf dient und ebenfalls flüssigkeitsundurchlässig ist und wobei ferner der Hohlzylinder eine Bodenplatte mit einer Öffnung aufweist, an der das zum Auslauf führende Tauchrohr angeschlossen ist.

Bei einer abgewandelten Ausführungsform besteht der Einsatz aus zwei aufrechtstehenden, mit Abstand voneinander gehaltenen flüssigkeitsundurchlässigen Platten, die im Behälter zwischen Einlauf und Auslauf in Hauptströmungsrichtung zwei Flüssigkeitsräume voneinander trennen und zwischen denen die Gitter- oder Netzstruktur einliegt, wobei die einlaufseitige Platte mit ihrem oberen Ende über die Höhe des Auslaufs hinausragt und am Behälterboden Öffnungen aufweist und die auslaufseitige Platte mit ihrem oberen Ende unterhalb der Höhe des Auslaufes endet und als Überlaufwand dient und beide Platten bis zum Boden reichen.

Die erfindungsgemäße Gestaltung der Einsätze bewirkt gegenüber bekannten Lösungen einen geänderten Strömungsverlauf, indem die gesamte verschmutzte Flüssigkeit gezwungen wird, in den Einsatz an seiner Unterseite einzutreten und in seiner Gitter- oder Netzstruktur von unten nach oben aufzusteigen, um dann über die Kante der Überlaufwand auszutreten. Somit verläuft die Strömung in Längsrichtung des Einsatzes und nicht quer zu diesem. Der damit verbundene längere Fließweg führt zwangsläufig zu einer Steigerung des Abscheidegrades.

Nach einer vorteilhaften Weiterbildung ist die Gitter- oder Netzstruktur an einem Tragelement befestigt und bildet mit diesem ein auswechselbares Element. Dabei kann das Tragelement als Gitter- oder Lochplatte ausgebildet sein. Im Falle der hohlzylindrischen Ausbildung des Einsatzes hat das Tragelement die Form einer Zylinderhülse, die ebenfalls aus Gitter- oder Lochmaterial bestehen kann.

Im Bereich der die Koaleszenz unterstützende Gitter- oder Netzstruktur werden in an sich bekannter Weise feinste Leichtflüssigkeitströpfchen zu größeren Tröpfchen vereinigt, die nach oben steigen. Dieses Aufsteigen wird bei dem erfindungsgemäßen Einsatz durch die innerhalb der Gitter- oder Netzstruktur nach oben gerichtete Strömung günstig beeinflußt. Auf diese Weise sind in einem Abscheider mit relativ kleinen Baumaßen für den Abscheidegrad Werte erzielbar, für die bislang ein wesentlich größerer Aufwand erforderlich war.

Dabei kommt als weiterer Vorteil hinzu, daß die Wartung und Reinigung einfacher und besser realisierbar ist, weil die Gitter- oder Netzstruktur entweder als einteiliges oder mehrteiliges Plattenelement oder in Form einer zylindrischen Hülse leicht auswechselbar ist.

Ein Ausführungsbeispiel der Erfindung ist in der Zeichnung schematisch dargestellt und wird nachfolgend näher erläutert. Es zeigt:
- Figur 1: einen senkrechten Mittenschnitt eines Abscheiders für Leichtfüssigkeiten mit einem hohlzylindrischen Einsatz und
- Figur 2: eine Draufsicht des Abscheiders.

Bei dem in der Zeichnung dargestellten Ausführungsbeispiel hat der Behälter (1) des Abscheiders einen kreisrunden Grundriß; er kann aber ebensogut eine andere, beispielsweise ovale oder rechteckige Umrißform haben. In der Nähe des oberen Randes des Behälters (1) befindet sich auf einer Seite ein Einlauf (2) mit einem in die Flüssigkeit eintauchenden Rohrstück (3). Auf der diametral gegenüberliegenden Seite ist in der Wand des Behälters (1) ein Auslauf (4) in etwa gleicher Höhe wie der Einlauf (1) enthalten, der mit einem zum Behälterboden führenden Rohr (5) verbunden ist.

Im Behälter ist außermittig, und zwar in der Nähe des Auslaufs (4) ein Einsatz (6) angeordnet, der als aufrechtstehender doppelwandiger Hohlzylinder ausgebildet ist. Äußere und innere Zylinderwand (7) bzw. (8) sind flüssigkeitsundurchlässig und begrenzen einen Ringraum (9). Der hohlzylindrische Einsatz erstreckt sich bis in die Nähe des Behälterbodens und ist an seinem unteren Ende durch eine Bodenplatte (10) mit einer mittigen Öffnung (10a) verschlossen. An die mittige Öffnung (10a) ist das zum Auslauf (4) führende Tauchrohr (5) angeschlossen.

Die äußere Zylinderwand (7) überragt mit ihrem freien Ende den Flüssigkeitsspiegel, während die innere Zylinderwand (8) unterhalb des Flüssigkeitsspiegels endet und mit ihrer oberen Kante (11) als Überlaufwand dient. An ihrem unteren Ende enthält die äußere Zylinderwand (7) mehrere Einlauföffnungen (12), die mit Abstand voneinander über ihren gesamten Umfang verteilt sind.

Der Ringraum (9) ist mit einer Gitter- oder Netzstruktur (13) angefüllt, die in an sich bekannter Weise aus Fasern oder Drahtgewirk bestehen kann. Verbunden ist die Gitter- bzw. Netzstruktur mit einem zylindrischen Tragelement (14), beispielsweise in Form einer Siebhülse oder dergleichen.

Der Strömungsverlauf der durch den Einlauf (2) eintretenden verschmutzten Flüssigkeit ist durch Pfeile angedeutet. Wesentlich bei der so erzeugten Strömung ist, daß die gesamte Flüssigkeit durch die Öffnungen (12) am unteren Ende des mit der Gitter- bzw. Netzstruktur (13) angefüllten Ringraumes (9) eintritt und die Struktur (13) in einer aufwärts gerichteten Strömung durchdringt, um dann über die Kante (11) in den Innenraum (15) des Einsatzes (6) zu gelangen, aus dem sie an seinem unteren Ende austritt und zum Auslauf (4) fließt. Die für den Strömungsverlauf zweckmäßigen Querschnitte sind in Abhängigkeit von der Durchsatzmenge zu wählen.

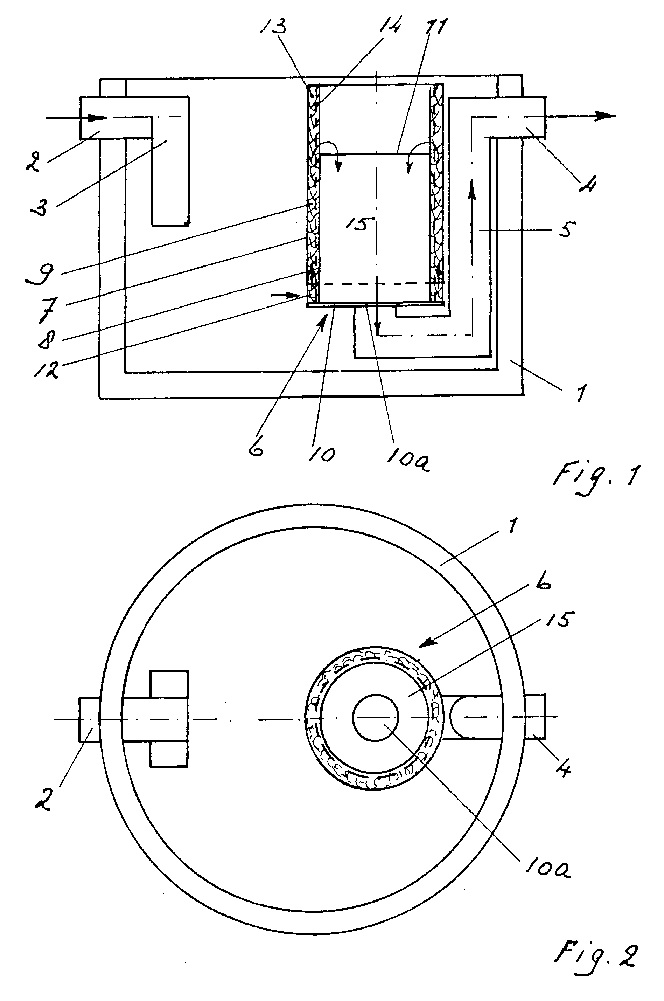

Anstelle eines Einsatzes mit einem doppelwandigen Hohlzylinder kann das Doppelwandgebilde auch als ebene Wand ausgebildet sein, die im Behälter zwischen Einlauf und Auslauf zwei Räume voneinander trennt. Bei einer solchen Ausführung steht die Doppelwand auf dem Boden des Behälters auf. Die Rohrführung für die abfließende Flüssigkeit kann ähnlich wie bei der Ausführungsform der Figuren 1 und 2 gestaltet sein.

## Patentansprüche

1. Abscheider für Leichtflüssigkeiten, insbesondere zum Trennen von Gemischen aus Wasser und spezifisch leichteren Flüssigkeiten wie Öl, Benzin oder dergleichen, mit einem Behälter (1), der an seinem oberen Ende einen Einlauf (2) und einen mit einem Tauchrohr (5) verbundenen Auslauf (4) aufweist, ferner mit einem Einsatz (6) in Gitter- oder Netzstruktur für den Durchtritt der gesamten Flüssigkeitsströmung zwischen Ein- (2) und Auslauf (4), dadurch gekennzeichnet, daß der Einsatz (6) als aufrechtstehender, doppelwandiger Hohlzylinder ausgebildet ist, bei dem zwischen Innen- und Außenwand (8, 7) die Gitter- oder Netzstruktur eingebettet ist, daß die äußere Zylinderwand (7) mit ihrem oberen Ende über die Höhe des Auslaufs (4) hinausragt, als Tauchwand flüssigkeitsundurchlässig ist und am unteren Ende Einlauföffnungen (12) aufweist, daß die innere Zylinderwand (8) unterhalb der Höhe des Auslaufes endet und als Überlauf dient und ebenfalls flüssigkeitsundurchlässig ist und daß der Hohlzylinder eine Bodenplatte (10) mit einer Öffnung (10a) aufweist, an der das zum Auslauf (4) führende Tauchrohr (5) angeschlossen ist.

2. Abscheider nach Anspruch 1, dadurch gekennzeichnet, daß die Gitter- oder Netzstruktur (13) an einem Tragelement (14) befestigt ist und mit diesem ein auswechselbares Element bildet.

3. Abscheider nach Anspruch 2, dadurch gekennzeichnet, daß das Tragelement (14) als Zylinderhülse aus Gitter- oder Siebmaterial ausgebildet ist.

4. Abscheider für Leichtflüssigkeite nach dem Oberbegriff des Anspruchs 1, dadurch gekennzeichnet, daß der Einsatz aus zwei aufrechtstehenden, mit Abstand voneinander gehaltenen, flüssigkeitsundurchlässigen Platten gebildet ist, die im Behälter zwischen Einlauf und Auslauf in Hauptströmungsrichtung zwei Flüssigkeitsräume voneinander trennen und zwischen denen die Gitter- oder Netzstruktur einliegt, daß die einlaufseitige Platte mit ihrem oberen Ende über die Höhe des Auslaufs hinausragt und am Behälterboden Öffnungen aufweist, daß die auslaufseitige Platte mit ihrem oberen Ende unterhalb der Höhe des Auslaufes endet und als Überlaufwand dient und daß beide Platten bis zum Boden reichen.

5. Abscheider nach Anspruch 4, dadurch gekennzeichnet, daß die Gitter- oder Netzstruktur an einem Tragelement befestigt ist und mit diesem ein auswechselbares Element bildet.

6. Abscheider nach Anspruch 5, dadurch gekennzeichnet, daß das Tragelement als Gitter- oder Lochplatte ausgebildet ist.

## Claims

1. A separator for light liquids, more particularly for separating mixtures of water and liquids of lighter specific gravity, such as oil, petrol or the like, comprising a tank (1), the top end of which has an inlet (2) and an outlet (4) connected to an immersed tube (5), and also having an insert (6) of mesh or network structure for the passage of the entire liquid flow between the inlet (2) and the outlet (4), characterised in that the insert (6) is formed as an upright double-wall hollow cylinder in which the mesh or network structure is embedded between the inner and outer walls (8, 7), in that the outer cylinder wall (7) projects by its top end above the height of the outlet (4) and is formed as a liquid-impermeable immersed wall and has inlet openings (12) at the bottom end, in that the inner cylinder wall (8) terminates below the height of the outlet and acts as an overflow and is also liquid-impermeable and in that the hollow cylinder has a baseplate (10) with an opening (10a), to which the immersed tube (5) leading to the outlet (4) is connected.

2. A separator according to claim 1, characterised in that the mesh or network structure (13) is secured to a support element (14) and together with the latter forms an interchangeable element.

3. A separator according to claim 2, characterised in that the support element (14) is constructed as a cylindrical sleeve of mesh or screen material.

4. A separator for light liquids according to the preamble of claim 1, characterised in that the insert is formed by two upright spaced liquid-impermeable plates which separate two liquid chambers from one another in the tank between the inlet and outlet in the main flow direction and between which the mesh or network structure lies, in that the entry plate projects by its top end above the height of the outlet and has openings at the tank base, in that the outlet plate terminates by its top end below the height of the outlet and acts as an overflow wall and in that both plates extend as far as the base.

5. A separator according to claim 4, characterised in that the mesh or network structure is secured to the support element and together with the latter forms an interchangeable element.

6. A separator according to claim 5, characterised in that the support element is constructed as a mesh or perforate plate.

## Revendications

1. Séparateur de liquides légers, notamment pour la séparation de mélanges constitués par de l'eau et des liquides spécifiquement plus légers tels que de l'huile, de l'essence ou analogues, comprenant un réceptacle (1) qui comporte à son extrémité supérieure une entrée (2) et une sortie (4) reliée à un tube plongeur (5), et en outre un insert (6) à structure de type grille ou réticulée pour le passage de l'ensemble du courant de liquide entre l'entrée (2) et la sortie (4), caractérisé en ce que l'entrée (6) est constituée sous forme d'un cylindre creux à double paroi et disposé verticalement, dans lequel est incorporée entre ses parois interne et externe (8, 7) la structure de type grille ou réticulée, en ce que la paroi cylindrique externe (7) fait saillie par son extrémité supérieure au-delà de la hauteur de la sortie (4), est constituée sous forme d'une paroi plongeuse étanche au liquide et comprend à son extrémité inférieure des ouvertures d'entrée (12), en ce que la paroi cylindrique interne (8) se termine au-dessous de la hauteur de la sortie et sert de trop-plein et est également étanche au liquide, et en ce que le cylindre creux comprend une plaque de fond (10) avec une ouverture (10a) à laquelle est raccordé le tube plongeur (5) qui conduit à la sortie (4).

2. Séparateur selon la revendication 1, caractérisé en ce que la structure de type grille ou réticulée (3) est fixée à un élément porteur (14) et forme avec ce dernier un élément interchangeable.

3. Séparateur selon la revendication 2, caractérisé en ce que l'élément porteur (14) est constitué sous forme d'un manchon cylindrique en un matériau de type grille ou de tamisage.

4. Séparateur de liquides légers selon le préambule de la revendication 1, caractérisé en ce que l'insert est constitué par deux plaques disposées verticalement, maintenues à distance l'une de l'autre et étanches au liquide, qui séparent l'une de l'autre deux enceintes à liquide dans le réceptacle entre l'entrée et la sortie dans la direction principale de l'écoulement, et entre lesquelles est disposée la structure de type grille ou réticulée, en ce que la plaque située du côté entrée fait saillie par son extrémité supérieure au-delà de la hauteur de la sortie, et comprend dans le fond du réceptacle des ouvertures, et en ce que la plaque située sur le côté sortie se termine par son extrémité supérieure au-dessous de la hauteur de la sortie et sert de paroi de trop-plein, et en ce que les deux plaques parviennent jusqu'au fond.

5. Séparateur selon la revendication 4, caractérisé en ce que la structure de type grille ou réticulée est fixée à un élément porteur et forme avec ce dernier un élément interchangeable.

6. Séparateur selon la revendication 5, caractérisé en ce que l'élément porteur est constitué sous forme d'une plaque de type grille ou à trous.
